# EUROPEAN PATENT APPLICATION

(11) **EP 0 738 852 A1**
(43) Date of publication of application: **23.10.1996**
(21) Application number: 95105888.2
(22) Date of filing: 20.04.1995
(51) Int. Cl.: F16L 41/02

(54) **Joint connector between a tube and a plurality of tubes**

(71) Applicant: RACO S.p.A., 33040 Attimis (UD) (IT)
(72) Inventor: Hutter, Gerald, I-33040 Attimis (UD) (IT)
(74) Representative: D'Agostini, Giovanni, Dr.

(57) **Abstract**

Joint connector between a tube and a plurality of tubes, of the coupling type for the connection of a main tube of diameter "C" from one side with a plurality of ramification tubes (t2) of diameter "D" < "C", from the opposite side that depart from an axial convergence, in substantial tilted divarication from the opposite side, characterized in that it is made up of two elements, a container (1) for the coupling of said "C" diameter main tube and one contained (2) in a portion of the first (1), the second being equipped with said ramification holings (D'-D) for the coupling of said ramification tubes (t2).

## Description

This invention has for object a joint connector between a tube and a plurality of tubes.

More particularly the invention refers to the injection joints for freezing fluid distributors to assemble onto fin packed heat exchangers.

The tubing systems utilizing said connectors and respective equipment are also object of the present invention.

Similarly, the assembly system for the formation of tube ramification is also object of the present invention.

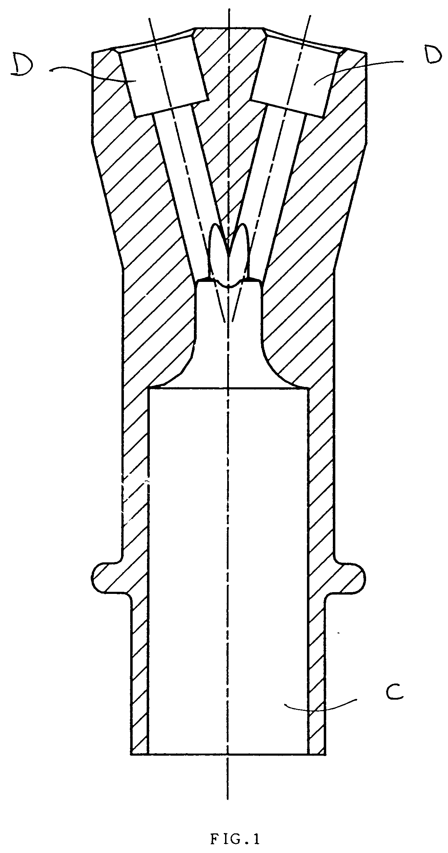

The so-called injection collector distributors are presently obtained by means of turning and subsequent holing starting from brass- or aluminium-filled bars in a single piece, depending on how same are utilized in the building of brass/aluminium or entirely aluminium exchangers (see Figure 1).

The cost of these components is high for a large percentage of scraps and above all for the high machine time involved for performing same.

The productive cycle provides a first phase made up of turning operations and a second phase "of recovery" for the realization of the holes of the main tube "C" and of its respective ramifications "D" that are in tilted opposition and convergent towards the central axis of the main tube collector.

The two processing phases are normally carried out with different machines.

Additionally, because of the fact that the processing happens by removal of shaving, it is not possible in practice to obtain other forms that are not cylindrical while the total length of the part is reduced and however not able to be increased at will.

Finally, there is the necessity to have many types of distributors even with the same number of exit holes (D) because the other sizes vary, as a result the stocks necessary in store are considerable.

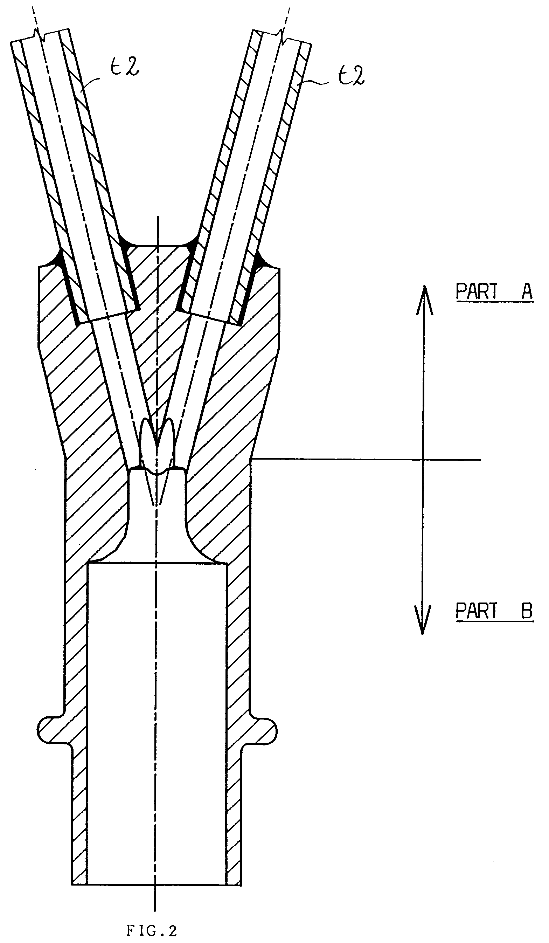

Such part must then be joined with a plurality of tubes (T2) by means of braze welding (see Fig.2).

### Scope of the present invention is to obviate the above-mentioned drawbacks

This and other scopes are being reached as claimed by means of a joint connector between a tube and a plurality of tubes, of the coupling type for the connection of a main tube of diameter "C" from one side with a plurality of ramification tubes of diameter "D" < "C" from the opposite side that depart from an axial convergence, in a substantial tilted divarication from the opposite side, characterized in that it is made up of two elements, a container for the coupling of said main "C" diameter tube and a content in a portion of the first, the second being equipped with said "D" ramification holings for the coupling of the respective said ramification tubes.

Advantageously these two components will have to be assembled between them and then welded with a plurality of tubes in the desired combination.
More particularly

With the solution planned the following significative advantages are obtained :
- the first element, the container of which is of tubular form and thus able to be carried out with automatic machinery and with the minimum use of raw material not being scraps and above all the size and the shape of the main tube "C" will be able to be varied at will according to necessity,
- the second element which ramifier is contained in the first, is single with the same number of exit holes having the same diameter with a reduction of the stocks in store;
- the production cost of this second element may be the least possible;
- both the elements then assembled by means of a coupling, constitute a containment glass in which, with a single operation, the welding alloy has the possibility to adhere perfectly to the various components to assemble.

A perfect pressure seal is so realized and consequently the percentage of waste pieces as a result of welding defects is practically zero.

These and other advantages will appear from the subsequent detailed description of preferential solutions of realization with the help of the drawings included, the execution particulars of which are not to be considered limitative but only illustrative.
Figure 1 represents an axial sectional view of the connector in a single piece, made according to the technique generally used by tool machines.
Figure 2 represents a view of the assembly of ramification tubes (t2) of the specific part of the connector of the noted technique of Fig. 1, where the necessity to carry out a double braze welding is highlighted, practically one for each ramification tube.

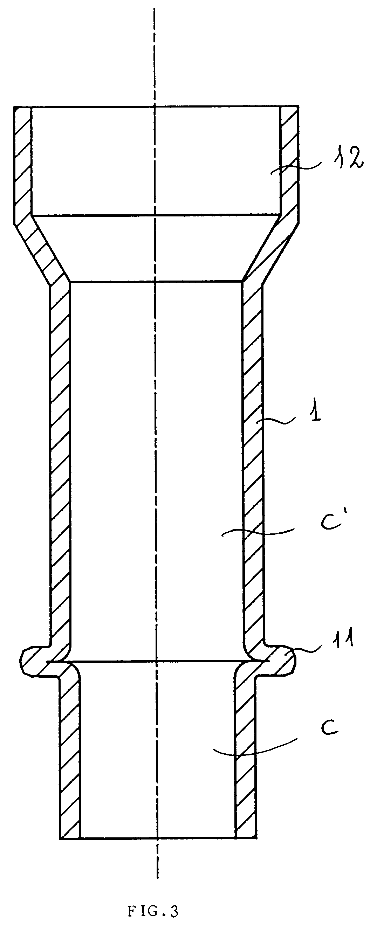

Figure 3 represents an axial sectional view of the first element container according to the present invention.

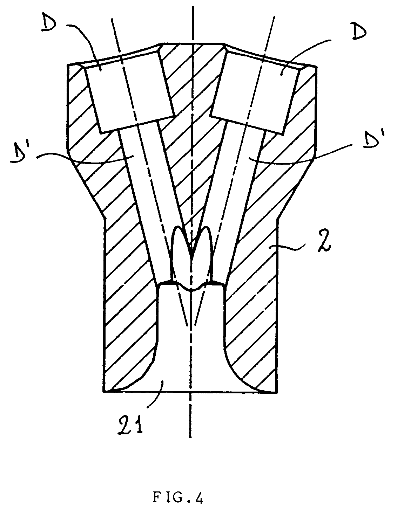

Figure 4 represents, an axial section of the second element contained in the first according to the invention.
Figure 5 represents the entire connector assembled with the respective ramification tubes braze welded, according to the invention.

Referring to the figures it is disclosed that:
- with 1 the first tubular shaped element container preferably equipped with a calking stop 11 that defines the mouth zone with diameter "C" of the main collector tube and separates it from a containment portion "C' " even, if necessary, with a greater diameter that glass-opens 12 externally;
- with 2 the second element contained in the first is indicated, realized by means of processing at the tool machines and involving a smaller flared mouth 21 that branches with a plurality of ramification holes "D" that widen "D" to joint receive respective ramification tubings (t2).

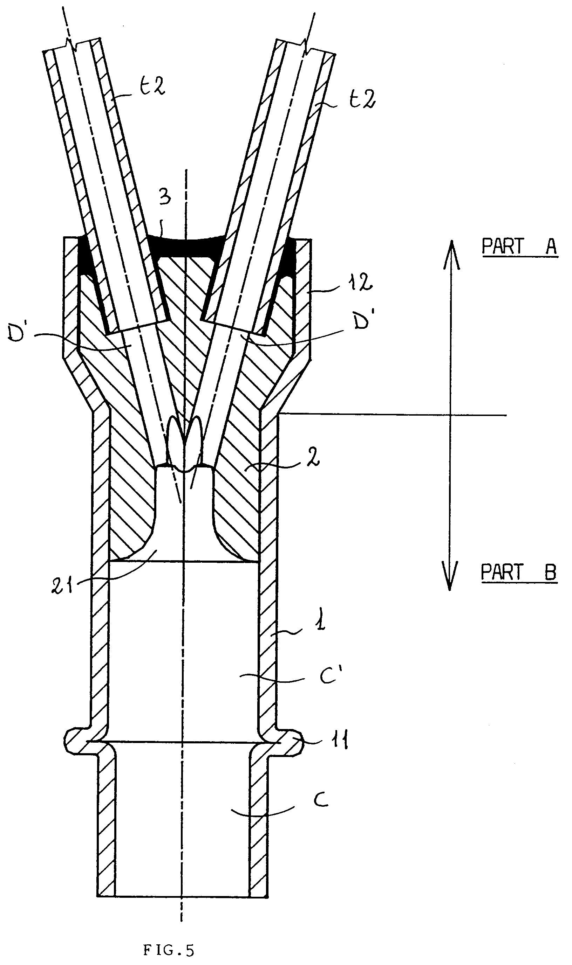

In particular, as indicated in Fig. 5, within the containment section "C'" of the tubular container 1, the second element 2, which is lower than the upper peak (Part A) of the container and opens on the lower side (Part B), is firstly coupled.

After the coupling of the ramification tubes (T2) within the corresponding holes "D" of the second element (2), the sealing is carried out by means of a single welding operation of braze welding material 3, as clearly indicated in Fig.5.
In this way all is perfectly sealed.

It is furthermore understood that combining different type 1 and 2 elements one may effect a variety of connection combinations reducing the stocks in store.

Advantageously in the first element container 1, the glass type flaring 12 protracts with a diameter on the lower side (Part B) of diameter "C' " > of the coupling diameter "C" to the main tubing.

Equally advantageously in the first element container 1, the containing zone (C' -12) of the second element (2) is divided from the mouth zone to the main tube "C" by means of external annular protruding (11) reinforcement calking.

## Claims

1. Joint connector between a tube and a plurality of tubes, of the coupling type for the connection of a main tube of diameter "C" from one side with a plurality of ramification tubes (t2) of diameter "D" < "C", from the opposite side that depart from an axial convergence, in substantial tilted divarication from the opposite side, characterized in that it is made up of two elements, a container (1) for the coupling of said "C" diameter main tube and one contained (2) in a portion of the first (1), the second being equipped with said ramification holings (D'-D) for the coupling of said ramification tubes (t2).

2. Connector according to claim 1., characterized in that the second element (2) is coupled within the first for a height such to be lower than the upper edge "A" of the first element container (1) to receive in a glass-like manner a single quantity of brazing material for the sealing together of the first element (1), second element (2) contained in the first element (1) and respective ramification tubes coupled in the second element (2).

3. Connector according to preceding claims, characterized in that in the first element container (1), the glass-type flaring (12) protracts with a diameter of lower side (B) of diameter "C' " > than the coupling diameter "C" to the main tubing.

4. Connector according to preceding claims, characterized in that in the first element container (1), the containment zone (C' - 12) of the second element (2) is divided from the mouth zone to the main tubing "C" by means of external annular protruding (11) reinforcement calking.

5. Tubing system connected with connectors according to any of the preceding claims.

6. Apparatuses involving ramification tubing with connections according to any of the claims from 1 to 4.

7. Realization system of tubing ramification, in which the ramification of a main tubing is provided from one side (1-C) in a plurality of ramification tubing (T") with a diameter lower (D) than the first, characterized by the fact that it:
- utilizes two connecting elements, one container (1) and the other contained (2) according to any of the claims from 1 to 4, selecting them in the appropriate combination necessitated;
- couples the second element (2) within the first (1) in order that its upper edge is lower than the upper edge of the container (1), in order to substantially form a containment glass (3);
- couples the respective ramification tubes (T2) in the corresponding holes (D) of said second element (2);
- carries out a single brazing operation in the respective containment glass, filling it with fused braze welding material (3).
